# EUROPEAN PATENT APPLICATION

(11) **EP 4 245 994 A1**
(43) Date of publication of application: **20.09.2023**
(21) Application number: 22162125.3
(22) Date of filing: 15.03.2022
(51) Int. Cl.: F03D 80/50, F03D 80/80, H02B 1/32, H02B 3/00

(54) **TOOL DESIGNED FOR REMOVING AT LEAST ONE COMPONENT ARRANGED IN A CABINET, SYSTEM COMPRISING A CABINET AND SUCH A TOOL AND METHOD FOR REMOVING AT LEAST ONE COMPONENT ARRANGED IN A CABINET**

(71) Applicant: Siemens Gamesa Renewable Energy A/S, 7330 Brande (DK)
(72) Inventor: Jensen, Brian, 7330 Brande (DK)
(74) Representative: SGRE-Association

(57) **Abstract**

Tool designed for removing at least one component (18) arranged in a cabinet (12), in particular an electrical cabinet (12) arranged in a wind turbine, wherein the tool (1) comprises a frame structure (2) adapted to be mounted to a border (13) of an access opening (14) of the cabinet (12), wherein the frame structure (2) comprises at least one receiving section (3), wherein, when the tool (1) is mounted at the cabinet (12), the receiving section (3) is arranged adjacently to the component (18) and protrudes at least partly from the access opening (14) into an area in front of the cabinet (12), wherein the receiving section (3) is designed to receive and support the component (18).

## Description

The invention relates to a tool designed for removing at least one component arranged in a cabinet, in particular an electrical cabinet arranged inside a wind turbine. Furthermore, the invention relates to a method for removing at least one component arranged in a cabinet.

Cabinets are used for instance to house components of electrical facilities as well as the connectors connecting the components for forming the electrical facility, or for connecting the components to further components outside the cabinet. For instance in course of maintenance routines, it may be required to exchange one or more of the components arranged in the cabinet. However, some components can have a considerable size or weight so that the removement of the components from the cabinet can be tedious and/or require multiple workers lifting the individual component. For example, this may be the case for components, which are used in electrical facilities designed for high electrical powers.

In addition, the component has to be arranged somewhere outside of the cabinet to allow for the exchange of the component and/or for conducting maintenance and/or repair work at the removed component. Since the space around the cabinet can be limited, as it is in particular the case for a cabinet arranged in a nacelle of a wind turbine, the removal of the component from the cabinet can be cumbersome and exhausting. Therefore, there is a need to provide tools and/or methods for facilitating the removal of a component that is arranged in a cabinet.

The invention is based on the objective problem to facilitate the removal of at least one component arranged in a cabinet.

According to the invention, this object is solved by a tool as initially described, wherein the tool comprises a frame structure adapted to be mounted to a border of an access opening of the cabinet, wherein the frame structure comprises at least one receiving section, wherein, when the tool is mounted at the cabinet, the receiving section is arranged adjacently to the component and protrudes at least partly from the access opening into an area in front of the cabinet, wherein the receiving section is designed to receive and support the component.

The tool is specifically designed for usage during the removal of a component from the interior of a cabinet. Hence, the tool comprises a shape and/or structural properties which are specifically designed and adapted for this task. The tool comprises specifically adapted structural properties that enable the tool to be releasably attached to the cabinet so that the tool may be mounted and dismounted for example prior to and after the removal of the component from the interior of the cabinet. The tool is assigned to at least one cabinet, or to at least one type of cabinets, respectively. In particular, the tool may be adapted to be used with different cabinets of a mutual type and/or of different types.

The receiving section of the tool is specifically adapted to the at least one component, or at least one certain type of components, respectively. In particular, the receiving section comprises specifically adapted or adaptable structural features that allow to receive and support one or more different types of components. Preferably, the receiving section may be designed to receive and support components of at least two different types. In this context, designed to receive and support the component means that the receiving section comprises structural properties that allow for moving the component from the cabinet onto the receiving section and to hold the component in place both during this movement and after the component has been removed from the cabinet.

By its frame structure, the tool can be attached to the border of the access opening of the cabinet. The access opening can be for instance a door, which may be closable by a door or the like. The border of the access opening, or the door frame, respectively, can comprise in particular a plurality of fixation points or fixation means, to which the frame structure of the tool can be attached. This allows for mounting the tool to the cabinet so that no additional stands and/or floor space for placing the tool is required.

The tool comprises a receiving section, which is arranged adjacently to the component to be exchanged in the mounted state of the tool. In the mounted state of the tool, the receiving section protrudes from the cabinet into an area in front of the cabinet. The receiving section is adapted for receiving and supporting the component at least in the mounted state of the tool. In particular, the receiving section defines a horizontal plane on which the component can be arranged after it has been moved out of the cabinet. The receiving section is specifically adapted to receive the component to be removed so that it can be placed securely on the receiving section. Furthermore, the receiving section is adapted to support the component so that it can be arranged on the receiving section without the need for an additional support device, or a manual support, respectively. Hence, the tool provides a specifically designed means to allow for placing the component in an area in front of the cabinet after its removal from the interior of the cabinet. Hence, the tool provides a support for the removed component in front of the access opening of the cabinet.

This significantly facilitates the removal of the component from the interior of the cabinet, since the component only has to be moved from its fixation position in the interior of the cabinet to the receiving section of the tool in front of the cabinet. Advantageously, the receiving section is arranged adjacently to the component, or to the fixation position of the component in the interior of the cabinet, respectively, so that no lifting of the component over a large vertical distance is required.

When the component has been placed on the receiving section, it is supported by the tool outside of the cabinet. This allows for performing maintenance tasks or the like on the component while it is arranged on the receiving section. It is also possible that the component is lifted from the receiving section, for instance by using a crane or the like. Advantageously, the receiving section of the tool protrudes from the access opening so that the component can be lifted easily in vertical direction from the receiving section, for instance in course of an exchange of the component.

The cabinet can be for instance an electrical cabinet, or a switch cabinet, respectively, in which a plurality of electrical components is arranged. The cabinet may be a cabinet arranged in a wind turbine, for instance in the interior of the nacelle of a wind turbine. In the interior of the nacelle, the free space in front of the cabinet may be confined due to the dense arrangement of technical devices and/or other components of the wind turbine. Therefore, the tool provides a space-saving means to support a component to be removed and/or exchanged from the cabinet in this confined area.

The cabinet can be for instance a housing of one or more power electronic devices, used for example in a wind turbine. For instance, the cabinet can house a converter used for the conversion of electrical energy in a wind turbine, a current source for providing a rotor current for a generator of the wind turbine or the like.

Advantageously, the tool can be used for removing different types of components from the cabinet, or components from different types of cabinets, respectively. The components can be in particular comparatively large and heavy components like transformers, capacitor racks, large resistors or the like. In particular, the component can have a weight between 10 kg and 100 kg, in particular between 15 kg and 50 kg.

According to an embodiment, the tool and/or the receiving section is/are designed and configured to receive and support an electrical component having a weight of at least 10 kg, in particular of at least 15 kg, further in particular of at least 25 kg, preferred of at least 30 kg, more preferred of at least 50 kg.

According to an additional or alternative embodiment, the tool and/or the receiving section is/are designed and configured to receive and support an electrical component having a weight of not more than 200 kg, in particular of not more than 150 kg, further in particular of not more than 100 kg, preferred of not more than 80 kg, more preferred of not more than 60 kg.

The frame structure is attachable to the border, or the door frame, respectively, of the access opening of the cabinet. Therefore, the width of the frame structure, which is arranged parallel to the plane defined by the access opening in the mounted state of the tool, can correspond to the width of the access opening. For instance, the width of the frame structure may be between 50 cm and 150 cm, in particular between 80 cm 120 cm. This allows for attaching the tool for example to the access openings of a standard-sized cabinets. The frame structure may comprise for instance a plurality of metal struts to allow for a stable support of a component arranged on the receiving section of the tool.

Preferably, the receiving section comprises at least two support sections, wherein the support sections are arranged at the edge of the access opening in the mounted state of the tool. The support sections are arranged in particular in such manner that one support section is arranged on a first side of the access opening and that the other support section is arranged on the opposing second side. This allows for instance to arrange one support section at the left-hand side of the access opening and the other one at the right-hand side of the access opening, so that a component with a width corresponding to the width of the cabinet can be supported with its edges on the support sections.

In the mounted state of the tool, the support sections may each protrude from the border of the access opening into the area in front of the cabinet. In particular, the support sections may protrude perpendicular to the area of the access opening, or the border of the access opening, respectively, so that a horizontal plane is defined. The support sections may be used to directly receive and support the component to be removed in front of the access opening. Alternatively, the support section may support a further component of the receiving section, wherein the component is received and supported by the further component of the receiving section in front of the access opening, or the cabinet, respectively.

In a preferred embodiment, at least one sliding pad is arranged on each of the support sections. In particular, the sliding pad may be releasably attached to the respective support section. The sliding pad may cover the top surface of the support section in order to facilitate a sliding of the component out of the cabinet and onto the support sections of the tool. The sliding pad may be fabricated for instance of a polymer material, for example nylon, so that less friction occurs when the component is slid from the interior of the cabinet onto the support sections of the receiving section of the tool.

Preferably, the receiving section comprises a supporting plate arrangement, wherein the supporting plate arrangement is, in particular releasably, attached to the support sections. The supporting plate arrangement can be used to support a component which is smaller than the distance between the support sections, so that it may not be supported directly by the support sections.

By a releasable attachment of the supporting plate arrangement to the receiving sections, a removal of the supporting plate arrangement from the frame structure is enabled. This allows the tool for using both the support sections and/or the supporting plate arrangement as receiving section, or for supporting the component, respectively. Advantageously, the tool can be used to support different types of components, in particular components with different sizes.

Preferably, the supporting plate arrangement comprises at least one plate and one or more strut elements, wherein the strut elements are attached to the support section and the plate is attached to the strut elements. The strut elements can be for instance straight or multiple angled. The usage of multiple angled strut elements has the advantage that the plate can be placed slightly underneath the support sections, to which the supporting plate arrangement is attached. Hence, by using the strut elements, the plate of the plate arrangement can be arranged hanging on the support structure using the strut elements.

In a preferred embodiment, the plate is adapted to be attached to the strut elements in at least two different positions and/or orientations and/or the plate comprises at least one bent edge. By changing the position of the plate relative to the frame of the tool, or the access opening in the mounted state of the tool, respectively, the plate may be used for supporting different types of components with different sizes and/or geometries.

To allow for different positions for fixation, the plate may comprise in particular a plurality of holes and/or slit holes which allow for attaching the plate in different orientations to the supporting section of the frame. For instance, the plate can be attached in a first position and in a second position, wherein in the second position, the plate is turned by 90° relative to the first position.

It is also possible to attach the plate in different orientations. Hence, the plate may be attached the other way round, so that both surfaces of the plate may be used as top surface, or as bottom surface, respectively. By providing at least one bent edge, it is possible to mount the plate such that the bent edge is pointing upwards and therefore serves as a stop section and/or a guiding section for a component arranged on the plate. Alternatively, the plate can be mounted the other way round so that the bent edge is pointing downwards and does not obstruct the arrangement of the component on the plate. Preferably, the plate comprises two bent edges, which are pointing in the same direction and which are arranged at opposing edges of the plate.

In a preferred embodiment, the frame structure comprises at least one stop segment at an edge of the receiving section opposite to the access opening in the mounted state of the tool. The stop segment therefore avoids that a component, which is arranged on the receiving section for instance by sliding and/or by lifting, can be moved over the edge of the receiving section opposite to the access opening. In particular, when sliding the component on the tool, a movement over the edge of the receiving section can be prevented so that there is no risk that the component can be inadvertently moved too far.

The stop segment may be provided as a strut, which protrudes vertically at least partly over a top surface of the receiving section. For example, the stop segment can be a strut that connects the two ends opposite to the access opening of the support sections of the receiving section. However, also other types of stop segments, for instance individual stop protrusions on each of the support sections, may be provided.

In a preferred embodiment, the frame structure comprises at least one support structure, which supports the edge of the receiving section opposite of the cabinet against the cabinet, in particular against an edge of the access opening, in the mounted state of the tool. The support structure may also be provided as a strut of the frame structure, which connects for instance an edge of a support section opposite to the access opening to the cabinet, in particular to an edge of the access opening. This increases the stability of the tool, in particular the stability of the receiving section, and facilitates the support of the component.

Preferably, the tool is attachable by a plurality of screws to the border of the access opening. The border of the access opening may comprise for instance a plurality of threaded holes, which may engage with the screws used for attaching the tool. This allows for flexibly attaching the tool to the access opening at different positions to allow for arranging the receiving section adjacently to the component in the interior of the cabinet.

A system according to the invention comprises a cabinet and a tool according to the invention. The system may also be denoted as cabinet arrangement. The tool is specifically designed for removing a component from the respective cabinet of the system.

In a preferred embodiment, the cabinet is an electrical cabinet for a wind turbine. The cabinet may be arranged in the interior of a wind turbine, or adapted for being arranged in the interior of a wind turbine, respectively, wherein the interior may be the interior of a nacelle or of a tower of the wind turbine.

Preferably, the cabinet comprises at least one component, wherein the component is an electrical component, in particular a transformer, a capacitor arrangement comprising at least one capacitor and/or a resistor arrangement comprising at least one resistor.

A method for removing at least one component arranged in a cabinet according to the invention uses a tool according to the invention, wherein the frame structure of the tool is mounted to a border of an access opening of the cabinet and wherein the component is moved through the access opening and placed on the receiving section of the tool.

The component can be moved through the access opening for instance manually by one or more workers. Also, pulling the component by using a mechanical pulling means and/or a pulling actuator is possible.

Preferably, a tool with a receiving section comprising two support sections and with at least one sliding pad arranged on each of the support sections is used, wherein the component and/or a support arrangement supporting the component is slid from the cabinet through the access opening on the receiving section.

This may be used for instance for removing components from the cabinet, which have a width corresponding to the width of the access opening, or a width that is only slightly smaller than the width of the access opening, so that the component can be slid from its attachment sections in the interior of the cabinet onto the receiving section of the tool. It is also possible to slide a component that is arranged on a support arrangement onto the receiving section, when the support arrangement, which may be used for fixating the component in the cabinet, exhibits a width corresponding to the distance between the supporting sections.

In an alternative embodiment of a method, a tool with a supporting plate arrangement is used, wherein the component is slid and/or lifted through the access opening and arranged on the supporting plate arrangement. This embodiment may be used for instance to support components that are narrower than the distance between the edges of the support sections so that a sliding onto the support sections is not possible. The usage of a supporting plate arrangement allows for supporting one or more components of different sizes. It is possible that a plurality of components is lifted through the access opening and arranged on the plate arrangement, depending on the task which has to be done with the help of the tool.

All details and advantages described in relation to the tool according to the invention apply correspondingly to the system according to the invention and the method according to the invention and vice versa. All details and advantages described in relation to the system according to the invention apply correspondingly to the method according to the invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a tool according to the invention in a first configuration,
- Fig. 2: the tool in the first configuration mounted to the cabinet of a system according to the invention for performing a method according to the invention,
- Fig. 3: the embodiment of the tool in a second configuration,
- Fig. 4: the tool in the second configuration mounted to the cabinet,
- Fig. 5: the embodiment of the tool in a third configuration, and
- Fig. 6: the tool in the third configuration mounted to the cabinet.

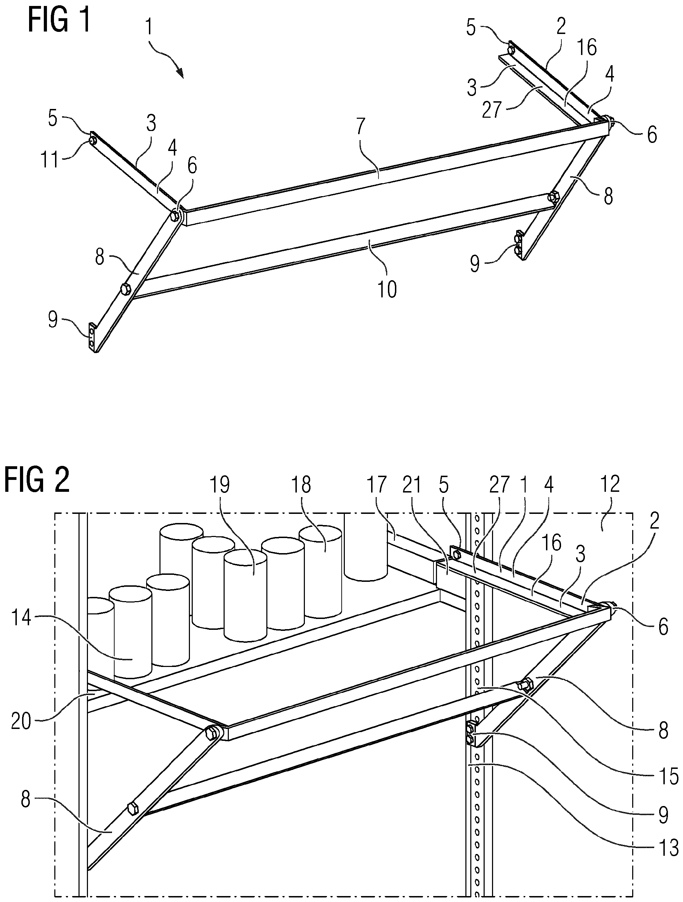

In fig. 1, an embodiment of a tool 1 in a first configuration is shown. The tool 1 may be used for removing at least one component arranged in a cabinet. The tool 1 comprises a frame structure 2 which can be mounted to a border of an access opening of the cabinet, from which the component shall be removed.

The frame structure 2 comprises a receiving section 3, which is formed by two support sections 4 of the frame structure 2. A first end 5 of the support sections 4 is adapted to be attached to the border of an access opening of a cabinet. On the second end 6, both support sections 4 are connected by a stop segment 7, which protrudes vertically at least partly over a top surface 27 of the support sections 4.

Furthermore, the frame structure 2 comprises two support structures 8, which each connect one of the second ends 6 of the support sections 4 to an attachment flange 9 that is adapted to be attached to the border of an access opening of a cabinet. By the support structures, the receiving section 3, or the support sections 3, respectively, are supported against the cabinet so that a stable support for one or more components is provided by the tool 1. To further improve the stability of the frame structure 2, an additional strut 10 is arranged in between the support sections 8.

At the first ends 5 of the support sections 3 as well as on the flanges 9, at least one screw 11 may be inserted for attaching the frame structure 2 to the cabinet. In this embodiment, on each position, two screws 11 are insertable in corresponding orifices.

In fig. 2, the tool 1 is shown in its mounted state, in which the tool 1 is attached to a cabinet 12. The tool 1 and the cabinet 12 form an embodiment of a system comprising the cabinet 12 and the tool 1, wherein the tool 1 is designed for removal of at least one type of components from the cabinet 12.

The frame structure 2 of the tool 1 is attached to a border 13 of an access opening 14 of the cabinet 12. Therefore, the screws 11 at the first ends 5 and at the flanges 9 of the frame structure 2 are each engaged into corresponding screw holes in a mounting frame 15 forming the border 13 of the access opening 14 at least at the vertical edges of the access opening 14.

In the depicted mounted state of the tool 1, the support sections 4 and hence the receiving section 3 protrude from the cabinet 12 into the area in front of the cabinet 12. The support sections 4 and hence the receiving section 3 protrude perpendicular to the border 13 of the access opening 14, so that a support of a component 18 to be removed in a horizontal plane in front of the cabinet 12, or in front of the access opening 14, respectively, is realized. The component 18 is removably arranged in the cabinet 12 and may be part of the system comprising the cabinet 12 and the tool 1.

On each of the top surfaces 27 of the support sections 4, a sliding pad 16 is arranged. The top side of each of the sliding pads 16 is arranged at the same height as a supporting structure 21 of the cabinet 12, on which an attachment section 17 of the component 18 to be removed from the interior of the cabinet 12 is arranged. The support sections 4 and the sliding pads 16 form the receiving section 3, which is adapted to receive the component 18 when it is sled out of the cabinet 12. Furthermore, the receiving section is adapted to support the component 18 in front of the cabinet 12, hence to provide a stable and secure arrangement of the component 18 in front of the cabinet 12.

In the depicted embodiment, the component 18 is a capacitor arrangement comprising a plurality of capacitors 19 which are arranged on a mutual, plate-shaped supporting arrangement 20. The attachment sections 17 of the component 18 are each supported by one of the supporting structures 21 of the cabinet 12. Each of the supporting structures 21 is arranged adjacently to one of the supporting sections 4, or the receiving section 3 of the tool 1, respectively. In addition to the depicted component 18, also other types of components with a comparable geometry and a comparable or smaller weight may be received and supported by the receiving section 3 of the tool 1 in its first configuration.

For removal of the component 18, the support sections 17 of the component 18 can be unattached from the respective supporting structures 21 of the cabinet 12 so that the component 18 can be slid from the interior of the cabinet 12 onto the receiving section 3 of the frame structure 2. Advantageously, the receiving section 3 is arranged directly adjacently to the supporting structure 21 of the cabinet 12 so that the component 18 does not have to be lifted during removal. Furthermore, the sliding pads 16, which may comprise or consist of a low-friction material, for instance a polymer material like nylon, facilitate the sliding of the component 18 onto the receiving section 3, since the support sections 17 of the component 18, which are in direct contact with the sliding pads 16, can be moved along the sliding pads 16 without much frictional resistance.

Once the component 18 has been placed on the receiving section 3, maintenance procedures on the component 18 can be conducted. In addition or alternatively, also an attachment of the component 18 to a crane and a lifting and/or an exchange of the component 18 is possible.

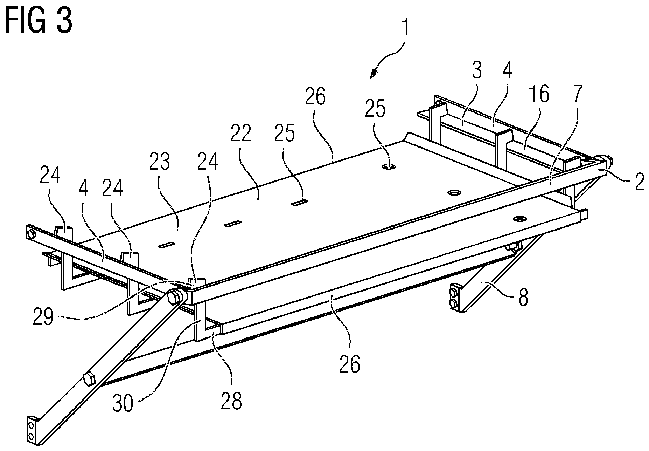

In fig. 3, a second configuration of the tool 1 is shown. The tool 1 comprises the same elements as shown in fig. 1, wherein additionally a support plate arrangement 22 is arranged on the supporting sections 4 of the tool 1.

The supporting plate arrangement 22 comprises at least one plate 23 as well as a plurality of strut elements 24. The strut elements 24 are attached to the support sections 4 of the frame structure 2. Each of the support structure 24 comprises a multiple angled structure so that the plate 22 is arranged underneath the support sections 4. The plate 23 is attached to the center sections 28 of the strut elements 24, wherein the attachment of the strut elements 24 occurs at their end sections 29. Between each end section 29 and the center section 29, a double-angled sections 30 of the strut elements 24 is arranged.

The plate 23 comprises a plurality of holes 25, which may be provided as circular and/or slit holes. The attachment of the plate 23 to the strut elements 24 can occur for instance by using screws. Furthermore, the plate 23 comprises two bent edges 26, which are pointing downwards in the depicted orientation of the plate 23.

When sliding the component onto the frame structure 2, the stop segment 7 prevents a movement of the component 18 over the edge of the receiving section 4 opposite to the access opening 14, or over the second ends 6 of the support sections 4, respectively.

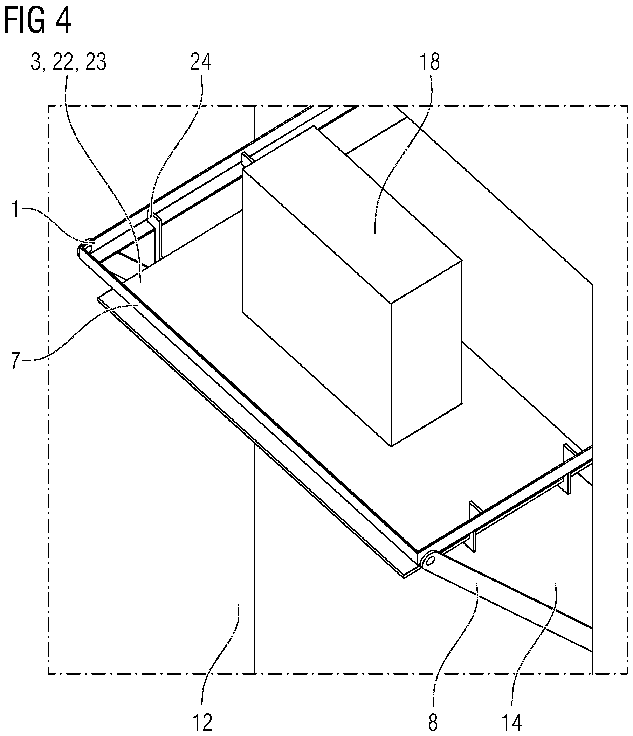

In fig. 4, the second configuration of the tool 1 is shown attached to the access opening 14 of the cabinet 12. In this embodiment, the component 18 is shown arranged on the receiving section 3, which is provided by the plate 23 of the plate arrangement 22. The component 18 is supported on the tool 1 in front of the cabinet 12, or in front of the access opening 14, respectively. In this embodiment, the component 18 is a resistor device, or a resistor arrangement, respectively, that has been lifted from the interior of the cabinet 12 onto the receiving section 3. In addition to the resistor device, also other types of components with a comparable geometry and a comparable or smaller weight may be received and supported by the receiving section 3 of the tool 1 in its second configuration.

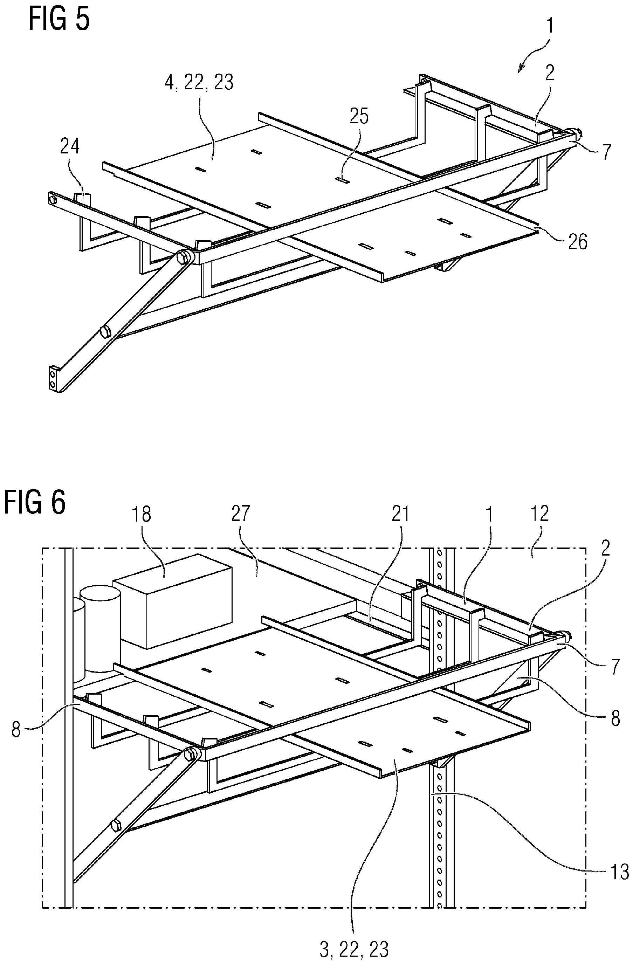

In fig. 5, a third configuration of the tool 1 is shown. In this configuration, the plate 23 of the plate arrangement 22 has been arranged in a second position relative to the frame structure 2. The plurality of holes 25 in the plate enables a fixation of the plate to the strut elements 24 in different positions.

Compared to the second configuration of the tool 1, the plate is turned by 90°. Furthermore, the plate 23 has also been flipped so that the bent edges 26 of the plate 23, which were pointing downwards in the second configuration, are now pointing upwards providing additional longitudinal stops for a component moved onto the receiving section 3, or onto the plate 23, respectively. In the direction perpendicular to the area of the access opening 14, a movement of the component is again hindered by the stop segment 7.

In fig. 6, the third configuration of the tool 1 is shown in its mounted state to the cabinet 12. The tool 1 is attached in such manner to the cabinet 12 that the plate 23 forming the receiving section 4 of the tool 1 is arranged adjacently to the component 18 to be exchanged. In particular, a top surface of the plate 23 is arranged flush with the supporting structure 21 of the cabinet 12, on which the component 18 is arranged. This allows for lifting and/or sliding the component 18 onto the receiving section 3 of the tool 1. Advantageously, both the bent edges 26 and the stop segments 7 of the tool 1 confine the movement of the component 18 so that it cannot slide from the plate 23. Also in the third configuration, different types of components with a comparable geometry and a comparable weight may be received and supported by the receiving section 3 of the tool 1.

To allow for a usage of the tool 1 in the different configurations, the supporting plate arrangement 22 is releasably attached to the frame structure 2. In addition, also the sliding pad 16 arranged on the support sections 4 may be releasably attached so that they can be removed optionally prior to the attachment of the supporting plate arrangement 22.

The tool 1 may be fixated in different positions to the border 13 of the access opening 14 of the cabinet 12 so that it may be used for removal of different types of components 18. Preferably, the tool 1 is adapted to support components up to a weight between 10 kgs and 100 kgs, in particular between 15 kgs and 50 kgs. The width of the frame structure 2 extending parallel to the plane defined by the access opening 14 in the mounted state of the tool 1 may be between 50 cm and 150 cm, in particular between 80 cm 120 cm. However, also other widths are possible, depending of the type of cabinet from which the component 18 shall be removed.

The parts of the frame structure 2 and/or the parts of the supporting plate arrangement 22 may be fabricated for instance from metal, in particular from stainless steel. The sliding pad 16 may be fabricated from a material which exhibits a low friction, for instance from nylon or the like. All components of the frame structure 2 may be attached to one or more of the other components using screws so that the entire tool 1 can be disassembled for transport.

The cabinet 12 can be in particular an electrical cabinet, or a switch cabinet, respectively, which houses a plurality of electronic, in particular power electronic, devices. However, it is also possible that the cabinet is of another type and houses other types of components of comparable sizes and/or weights, wherein the tool 1 can also be used advantageously in a method for removing the components 18 from the cabinet 12 as previously described. In particular, the cabinet 12 may be a cabinet arranged in a wind turbine, for example inside a nacelle or inside a tower of a wind turbine.

In an embodiment of a method for removing at least one component 18 arranged in the cabinet 12, the tool 1 is first mounted to the border 13 of the access opening 14 of the cabinet 12. Afterwards, the component is moved through the access opening 14 and placed on the receiving section 3 of the tool 1. Depending on the configuration of the tool 1 which is used, the component 18 can be moved differently from the interior of the cabinet 12 onto the receiving section 3 of the tool 1. For example, when a tool with a sliding pad 16 arranged on each of the support sections 3 is used, the component 18 may be slid onto the tool 1, wherein in particular the edges of a support plate supporting the component 18 are slid on the receiving section 4.

By using a tool 1 in the second or third configuration, the component 18 can be slid directly from the respective supporting structure 21 onto the plate arrangement 22. In case that the sliding of the component 18 is obstructed or not possible due to the structure of the component 18, also lifting of the component 18 onto the plate 23 is possible.

Although the present invention has been described in detail with reference to the preferred embodiment, the present invention is not limited by the disclosed examples from which the skilled person is able to derive other variations without departing from the scope of the invention.

## Claims

1. Tool designed for removing at least one component (18) arranged in a cabinet (12), in particular an electrical cabinet (12) arranged inside a wind turbine, the tool (1) comprising
a frame structure (2) adapted to be mounted to a border (13) of an access opening (14) of the cabinet (12), the frame structure (2) comprising at least one receiving section (3),
wherein, when the tool (1) is mounted at the cabinet (12), the receiving section (3) is arranged adjacently to the component (18) and protrudes at least partly from the access opening (14) into an area in front of the cabinet (12),
wherein the receiving section (3) is designed to receive and support the component (18).

2. Tool according to claim 1, wherein the receiving section (3) comprises at least two support sections (4) being arranged at the edge of the access opening (14) in the mounted state of the tool (1).

3. Tool according to claim 2, wherein at least one sliding pad (16) is arranged on each of the support sections (4).

4. Tool according to claim 2 to 3, wherein the receiving section (3) comprises a supporting plate arrangement (22) being attached to the support sections (4).

5. Tool according to claim 4, wherein the supporting plate arrangement (22) comprises at least one plate (23) and one or more strut elements (24), wherein the strut elements (24) are attached to the support sections (4) and the plate (23) is attached to the strut elements (24).

6. Tool according to claim 5, wherein the plate (23) is adapted to be attached to the strut elements (24) in at least two different positions and/or that the plate (23) comprises at least one bent edge (26).

7. Tool according to one of the preceding claims, wherein the frame structure (2) comprises at least one stop segment (7) at an edge of the receiving section (3) opposite to the access opening (14) in the mounted state of the tool (1) .

8. Tool according to one of the preceding claims, wherein the frame structure (2) comprises at least one support structure (8) supporting the edge of the receiving section (3) opposite of the cabinet (12) against the cabinet (12) in the mounted state of the tool (1).

9. Tool according to one of the preceding claims, wherein the tool (1) is attachable by a plurality of screws to the border (13) of the access opening (14).

10. System comprising a cabinet (12) and a tool (1) according to one of the preceding claims.

11. System according to claim 10, wherein the cabinet (12) is an electrical cabinet for a wind turbine.

12. System according to claim 10 or 11, wherein the cabinet (12) comprises at least one component (18), wherein the component (18) is an electrical component, in particular a transformer, a capacitor arrangement comprising at least one capacitor and/or a resistor arrangement comprising at least one resistor.

13. Method for removing at least one component (18) arranged in a cabinet (12), wherein a tool (1) according to one of the claims 1 to 9 or a cabinet arrangement according to one of the claims 10 to 12 is used, wherein the frame structure (2) of the tool (1) is mounted to a border (13) of an access opening (14) of the cabinet (12) and wherein the component (18) is moved through the access opening (14) and placed on the receiving section (3) of the tool (1) .

14. Method according to claim 13, wherein a tool (1) with a receiving section (3) comprising at least two support sections (4) and with at least one sliding pad (16) arranged on each of the support sections (4) is used, wherein the component (18) and/or a support arrangement (17) supporting the component (18) is slid from the cabinet (12) through the access opening (14) on the receiving section (3) .

15. Method according to claim 13, wherein a tool with a supporting plate arrangement (22) is used, wherein the component (18) is slid and/or lifted through the access opening (14) and arranged on the supporting plate arrangement (23) .
